(19) **Europäisches Patentamt / European Patent Office / Office européen des brevets**

(11) **EP 3 940 266 A1**

(12) # EUROPEAN PATENT APPLICATION
published in accordance with Art. 153(4) EPC

(43) Date of publication:
**19.01.2022 Bulletin 2022/03**

(21) Application number: **20774129.9**

(22) Date of filing: **18.02.2020**

(51) International Patent Classification (IPC):
**F16J 15/18** (2006.01)    **F16J 15/3244** (2016.01)

(52) Cooperative Patent Classification (CPC):
**F16J 15/18; F16J 15/3244**

(86) International application number:
**PCT/JP2020/006297**

(87) International publication number:
**WO 2020/189148 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2019 JP 2019048739**

(71) Applicant: **NOK Corporation**
**Minato-ku,**
**Tokyo 105-8585 (JP)**

(72) Inventors:
• **TADANO, Hikari**
  **Fujisawa-shi, Kanagawa 2510042 (JP)**
• **SEKI Masatoshi**
  **Kitaibaraki-shi, Ibaraki 3191535 (JP)**

(74) Representative: **Global IP Europe**
**Patentanwaltskanzlei**
**Pfarrstraße 14**
**80538 München (DE)**

(54) ## SEAL RING AND SEALING STRUCTURE

(57)    A circular annular seal ring made of a resin is disposed between an inner member and an outer member that rotate relative to each other. The outer member includes a liquid-storing space in which a liquid is disposed and an inner surface having a circular cross section. The inner member is disposed in the liquid-storing space and includes a circumferential groove. The seal ring is stationary relative to the inner surface of the outer member and is slidably disposed in the circumferential groove of the inner member with respect to the inner member to separate the liquid-storing space and an external space. Grooves are formed on an end surface on an external space side of the seal ring. Each groove has an end portion that opens at an inner peripheral surface of the seal ring, and extends in a direction opposite to a main rotational direction of the inner member relative to the seal ring from the open end portion. Each groove does not extend in the main rotational direction from the open end portion.

Fig. 1

**Description**

TECHNICAL FIELD

The present invention relates to circular annular seal rings and sealed structures having the circular annular seal rings.

BACKGROUND ART

Annular seal rings are used to seal annular gaps in various machines that have rotating members. For example, a seal ring is disposed between a power transmission shaft and a housing in an automotive vehicle to seal lubricating oil inside the housing.

Since the seal ring is interposed between members that rotate relative to each other, the seal ring contributes to an increase in rotational torque of the rotating members. To reduce this torque, a technique has been proposed whereby multiple grooves are formed on an end surface of the seal ring to introduce lubricating oil into the grooves upon rotation of the rotating member, as is disclosed in Patent Documents 1 to 3.

BACKGROUND DOCUMENTS

Patent Document

Patent Document 1: WO 2011/105513
Patent Document 2: WO 2011/162283
Patent Document 3: Japanese Utility Model Publication 3-88062

SUMMARY OF THE INVENTION

According to the prior art described above, it is expected that introduction of lubricating oil into the grooves of the seal ring will facilitate formation of an oil film between the seal ring and another member to reduce friction between the seal ring and the another member and thereby reduce a torque. However, if the oil film is of excessive thickness, there is a concern that a shear resistance of the oil film will increase and cause an adverse increase in the torque. Furthermore, if an excessive amount of lubricating oil is introduced into the grooves of the seal ring, there is a concern that some of the lubricating oil may leak to an outside space.

In electric vehicles (EVs) or hybrid electric vehicles (xHEVs), which have become popular in recent years, the rotational velocity of power transmission shafts is significantly higher than that of vehicles powered by internal combustion engines. Use of conventional seal rings in EVs or xHEVs, gives rise to concerns about increase in torque and about leakage of lubricating oil.

The present invention provides a seal ring that significantly reduces torque and also reduces an amount of liquid leakage, even when a relative rotational velocity difference of members is large.

A seal ring according to one aspect of the present invention is a circular annular seal ring made of a resin and disposed between an inner member and an outer member that rotate relative to each other. The outer member includes a liquid-storing space in which a liquid is disposed and an inner surface having a circular cross section. The inner member is disposed in the liquid-storing space and includes a circumferential groove. The seal ring is stationary relative to the inner surface of the outer member, and is slidably disposed in the circumferential groove of the inner member with respect to the inner member to separate the liquid-storing space and an external space. Multiple grooves are formed on an end surface on an external space side of the seal ring. Each of the grooves has an end portion that opens at an inner peripheral surface of the seal ring, and extends in a direction opposite to a main rotational direction of the inner member relative to the seal ring from the open end portion. Each of the grooves does not extend in the main rotational direction from the open end portion.

A sealed structure according to an aspect of the present invention includes the seal ring, the outer member, and the inner member.

In the present invention, multiple grooves extend in the direction opposite to the main rotational direction of the inner member relative to the seal ring from the open end portions, but do not extend in the main rotational direction from the open end portions. Thus, upon rotation of the inner member relative to the seal ring in the main rotational direction, the grooves facilitate discharge of the liquid from the grooves to thin the film of liquid, thereby reducing a shear resistance of the film of liquid, and facilitate vaporization of air in the liquid by cavitation and form a film of air in each of the grooves. Since the air film has a much lower shear resistance than that of the liquid film, the friction between the seal ring and the another member is significantly reduced, resulting in a reduction in the torque. This effect is particularly remarkable when there is a large difference in the relative rotational velocity of the members. In addition, since the grooves facilitate discharge of the liquid from the groove upon rotation of the inner member relative to the seal ring in the main rotational direction, an amount of leakage of the liquid can be reduced as compared with a case in which the liquid is fed into the grooves.

BRIEF DESCRIPTION OF THE DRAWINGS

Fig. 1 is a cross-sectional view showing a sealed structure including a seal ring according to an embodiment of the present invention;
Fig. 2 is a front view of the seal ring according to the embodiment;
Fig. 3 is a partial rear view showing the seal ring according to the embodiment, especially an example of grooves;

Fig. 4 is a partial rear view showing the seal ring according to the embodiment, especially another example of grooves;

Fig. 5 is a partial rear view showing the seal ring according to the embodiment, especially another example of grooves;

Fig. 6 is a partial rear view showing the seal ring according to the embodiment, especially another example of grooves;

Fig. 7 is a cross-sectional view showing the seal ring according to the embodiment, especially an example of grooves;

Fig. 8 is a cross-sectional view showing the seal ring according to the embodiment, especially another example of grooves;

Fig. 9 is a cross-sectional view showing the seal ring according to the embodiment, especially another example of grooves;

Fig. 10 is a cross-sectional view showing the seal ring according to the embodiment, especially another example of grooves;

Fig. 11 is a view illustrating fluid flow within the grooves in use of the seal ring according to the embodiment;

Fig. 12 is a partial rear view showing a seal ring according to a comparative example, especially an example of grooves;

Fig. 13 is a graph showing a relationship between the coefficient of friction and a dimensionless parameter with regard to the embodiment and the comparative example;

Fig. 14 is a graph showing a relationship between the torque and the relative velocity of the shaft and the housing with regard to the embodiment and the comparative example; and

Fig. 15 is a graph showing a relationship between the leakage amount of lubricating oil and the relative velocity of the shaft and the housing with regard to the embodiment and the comparative example.

DESCRIPTION OF EMBODIMENTS

Hereinafter, with reference to the accompanying drawings, various embodiments according to the present invention will be described. It is of note that the drawings are not necessarily to scale, and certain features may be exaggerated or omitted.

The sealed structures including seal rings according to embodiments of the present invention described below are used to seal annular gaps between power transmission shafts (motor output shafts) and housings in electric vehicles or hybrid electric vehicles. However, the following description is only illustrative, and the sealed structure with the seal ring according to the present invention can be used to seal liquids, such as a lubricating oil and a coolant, in various oil hydraulic machines, water hydraulic machines, and pneumatic machines. Such machines include, for example, engines, motors, generators, pumps, compressors, power steering devices in automotive vehicles, speed reducers in automotive vehicles, gearboxes in automotive vehicles, and cooling devices in automotive vehicles.

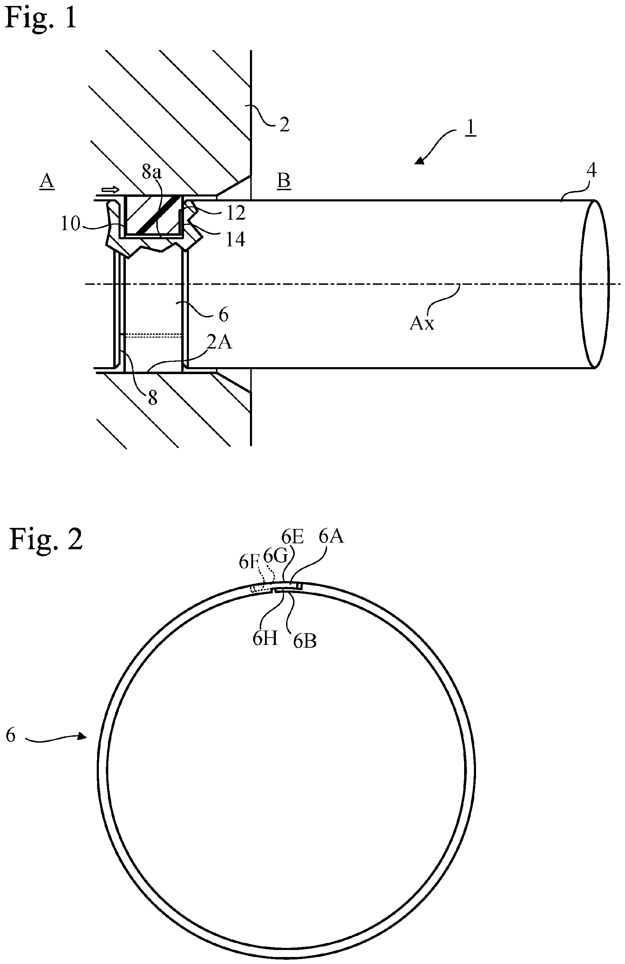

As shown in Fig. 1, the sealed structure 1 includes a housing (outer member) 2, a shaft (inner member) 4, and a seal ring 6. The housing 2 is a stationary member and has a lubricating oil space (liquid-storing space) A in which a lubricating oil to be sealed is disposed. The shaft 4 is inserted into the lubricating oil space A. The shaft 4 is a rotating shaft that rotates about the central axis Ax thereof, and is a power transmission shaft (motor output shaft) of an electric vehicle or a hybrid electric vehicle.

A circumferential groove 8 is formed on the outer peripheral surface of a portion of the shaft 4, the portion being located inside the inner surface 2A of an end of the lubricating oil space A, and the inner surface 2A having a circular cross section. A circular annular seal ring 6 made of a resin is disposed in the circumferential groove 8. The seal ring 6 seals the gap between the shaft 4 and the housing 2 to prevent or reduce leakage of the lubricating oil from the lubricating oil space A inside the housing 2 to an atmosphere space B.

The radial outer portion of the seal ring 6 protrudes radially outward from the circumferential groove 8, and the outer peripheral surface of the seal ring 6 is in contact with the inner surface 2A. The seal ring 6 is fixed to the inner surface 2A of the housing 2. Here, "fixed" means that the position of seal ring 6 remains stationary relative to the housing 2, and is not intended to limit whether or not the seal ring 6 is non-removably coupled to housing 2. In this embodiment, the seal ring 6 is interference fitted into the inner surface 2A. Furthermore, as will be described later, the seal ring 6 is fixed to the housing 2 under pressure of the lubricating oil that has entered the inside of the seal ring 6.

The seal ring 6 is slidably disposed in the circumferential groove 8 of the shaft 4 with respect to the shaft 4 to separate the lubricating oil space A and the external space B and contain the lubricating oil in the lubricating oil space A of the housing 2. In the sealed structure 1, the housing 2 and the seal ring 6 are fixed, whereas the shaft 4 rotates relative to the housing 2.

In this embodiment, the seal ring 6 has a rectangular cross-section. However, the cross-section of the seal ring 6 is not limited to a rectangular shape.

The seal ring 6 is formed of a hard resin material that has a small coefficient of friction, such as polyether ether ketone (PEEK), polyphenylene sulfide (PPS), or polytetrafluoroethylene (PTFE).

As shown in Fig. 2, the seal ring 6 is composed of an elongated curved bar that has two ends 6A and 6B. Accordingly, the seal ring 6 can be placed with ease around the shaft 4 such that the seal ring 6 is engaged in the circumferential groove 8 formed on the outer peripheral surface of the shaft 4.

The two ends 6A and 6B of the seal ring 6 each have two contact portions that allow for circumferential expansion of the seal ring 6 (and thus, radial expansion of the seal ring 6). More specifically, the end 6A has a protruding contact portion 6E and a sliding guide portion 6F, and the other end 6B has a protruding contact portion 6G and a sliding guide portion 6H. Each of the protruding contact portions 6E and 6G has a shape such that the radial outer portion thereof extends, and has a space in the radial inner portion. Each of the sliding guide portions 6F and 6H has a shape such that the radial outer portion thereof is recessed.

When the two ends 6A and 6B are butted, the radial inner surface (lower surface in Fig. 2) of the protruding contact portion 6E on the end 6A is in slidable contact with the radial outer surface (upper surface in Fig. 2) of the sliding guide portion 6H on the end 6B, and the radial outer surface (upper surface in Fig. 2) of the sliding guide portion 6F on the end 6A is in slidable contact with the radial inner surface (lower surface in Fig. 2) of the protruding contact portion 6G on the end 6B. Thus, the sliding guide portion 6H guides sliding of the protruding contact portion 6E, and the sliding guide portion 6F guides sliding of the protruding contact portion 6G.

Even though the ends 6A and 6B can slide on each other, the outer part of seal ring 6 maintains an endless ring shape that is continuous in a circumferential direction as long as the side surface of the protruding contact portion 6E is in contact with the end 6B and the side surface of the protruding contact portion 6G is in contact with the end 6A. Therefore, even if the seal ring 6 is extended in the circumferential direction (and thus, in the radial direction), the sealing ability of the seal ring 6 is not impaired.

The shape of the ends 6A and 6B shown in Fig. 2 is known and is referred to as a special step-cut. The shape of the ends 6A and 6B of the embodiment is only illustrative, and the shape of the ends of the seal ring 6 is not limited to the special step cut, but may be any of a step cut, a straight cut, and a bias cut. Alternatively, the seal ring 6 may be an endless ring without the ends 6A and 6B as long as the seal ring 6 can be inserted into the inner surface 2A of the housing 2, and can be engaged in the circumferential groove 8 of the shaft 4.

Referring to Fig. 1, as described above, the outer peripheral surface of the seal ring 6 is brought into contact with the inner surface 2A of the housing 2. Since the seal ring 6 has an elastic force to radially expand the seal ring 6 itself, the seal ring 6 is brought into close contact with the housing 2. On the other hand, there is a clearance between the inner peripheral surface of the seal ring 6 and the bottom surface 8a of the circumferential groove 8 of the shaft 4, and the lubricating oil in the lubricating oil space A can flow through the clearance. Therefore, the seal ring 6 is firmly fixed to the housing 2 since it is subject to pressure from the lubricating oil that enters the inside of the seal ring 6.

At the end surface 10 on the side of the lubricating oil space A of the seal ring 6, hydraulic pressure of the lubricating oil in the lubricating oil space A is exerted as depicted by an arrow, so that the seal ring 6 is pushed toward the side of the external space B. Therefore, the end surface 12 on the side of the external space B of the seal ring 6 is pressed against the wall surface on the side of the external space B of the circumferential groove 8 of the shaft 4. However, the lubricating oil penetrates a small gap between the end surface 12 and the wall surface on the side of the external space B of the circumferential groove 8. Thus, precisely stated, the end surface 12 is not in surface contact with the wall surface on the side of the external space B of the circumferential groove 8, and a film of oil (and a film of air that will be described later) is interposed therebetween.

Multiple grooves 14 are formed on the end surface 12 on the side of the external space B of the seal ring 6.

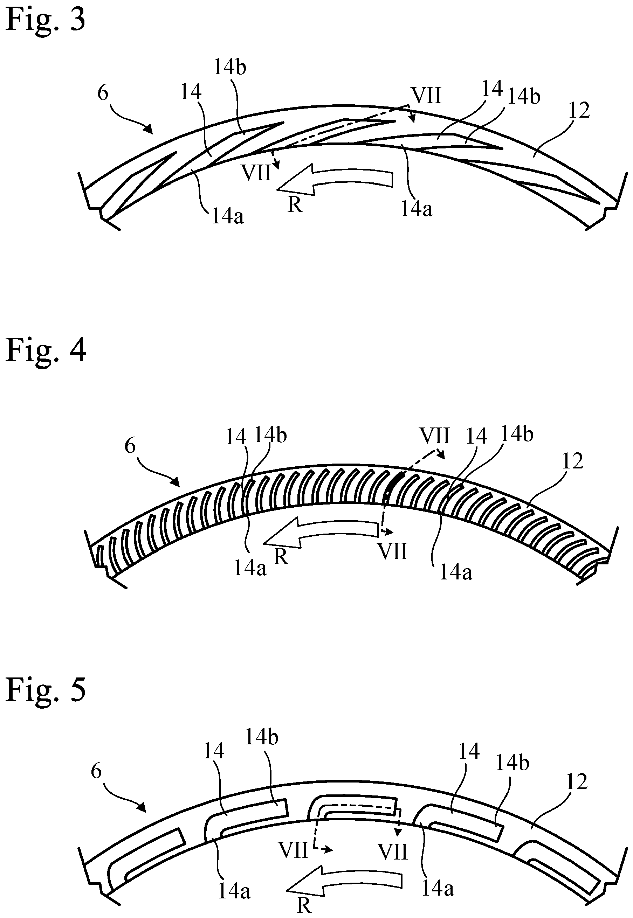

Each of Figs. 3 to 6 is a partial rear view of the seal ring 6 showing the end surface 12 of the seal ring 6, and especially showing an example of the grooves 14. In Figs. 3 to 6, arrow R indicates a main rotational direction of the shaft 4 (rotational direction mainly used). The main rotational direction of the shaft 4 is the rotational direction of a power transmission shaft when the automotive vehicle moves forward in a case in which the shaft 4 is the power transmission shaft of an electric vehicle or a hybrid electric vehicle.

It is of note that the main rotational direction varies depending on whether the seal ring 6 is placed on the right or left side of the automotive vehicle. When the main rotational direction is opposite to that shown in the drawings, orientations of the grooves 14 are also opposite to those shown in the drawings.

Preferably, the grooves 14 have the same shape and the same size, and are arranged on the end surface 12 at equiangular intervals in the circumferential direction around the central axis Ax. However, the grooves 14 need not necessarily be of the same shape and size. The angular intervals of the grooves 14 may be irregular.

As shown in Figs. 3-6, each groove 14 has an inner end portion 14a that is located radially inside and an outer end portion 14b that is located radially outside. The inner end portion 14a is open at the inner peripheral surface of the seal ring 6. The outer end portion 14b is closed, i.e., surrounded by walls.

Each groove 14 extends from the open inner end portion 14a in the direction opposite to the main rotational direction of the shaft 4 to the outer end portion 14b, and does not extend in the main rotational direction from the inner end portion 14a. Thus, upon the rotation of the shaft 4, the pressure at the inner end portions 14a of the grooves 14 becomes lower than that at the outer end portions 14b, and thus the fluid entering the grooves 14 is discharged from the grooves 14.

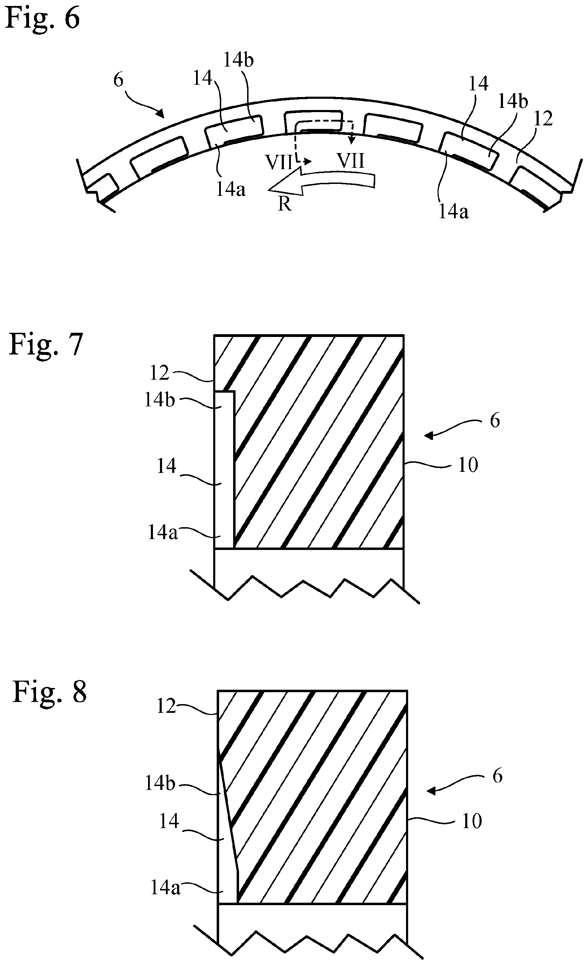

The grooves 14 may be any of the shapes shown in Figs. 3 to 6. In other words, each groove 14 may have a shape such as a portion of an arc or a portion of a spiral as shown in Fig. 3 or 4. Alternatively, each groove 14 may have a substantially L-shape as shown in Fig. 5 or 6. In the substantially L-shape in Figs. 5 and 6, the shorter portion has the inner end portion 14a, and the longer portion extends from the shorter portion in the direction opposite to the main rotational direction to the outer end portion 14b.

The length and width of grooves 14 are not limited. Fig. 4 shows grooves 14 with a narrow width, whereas Figs. 3, 5, and 6 show grooves 14 with a broader width.

The intervals of the grooves 14 are also not limited. Fig. 4 shows grooves 14 with narrow intervals, whereas Figs. 3, 5, and 6 show grooves 14 with broader intervals.

Other variations in the lengths, widths, and intervals of the grooves 14 are envisaged. In any case, the grooves 14 extend from the open inner end portions 14a in a direction opposite to the main rotational direction of the shaft 4 relative to the seal ring 6 so as to generate a film of air, which will be described later, between the seal ring 6 and the shaft 4, and do not extend from the inner end portions 14a in the main rotational direction.

Each of Figs. 7 to 11 is a cross-sectional view of a seal ring 6 showing an example of a groove 14. Each of Figs. 7 to 11 corresponds to a cross-section along VII-VII of Figs. 3 to 6.

As shown in Fig. 7, the groove 14 may have a uniform depth from the inner end portion 14a to the outer end portion 14b.

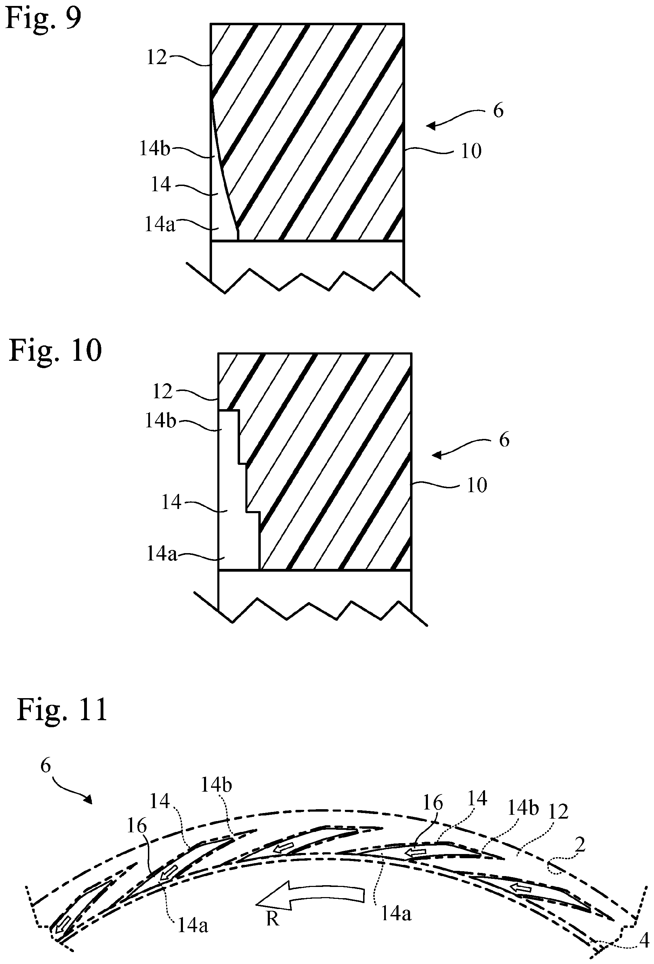

As shown in Fig. 8, the groove 14 may have a depth that gradually (linearly) decreases from the inner end portion 14a to the outer end portion 14b. As shown in Fig. 9, the groove 14 may have a depth that decreases gradually (in a curved shape) from the inner end portion 14a to the outer end portion 14b. As shown in Fig. 10, the groove 14 may have a depth that decreases stepwise from the inner end portion 14a to the outer end portion 14b.

Other variations of the depth of the grooves 14 are envisaged. In any case, the grooves 14 are formed so as to generate a film of air, which will be described later, between the seal ring 6 and the shaft 4. The width of the grooves 14 is, for example, 0.1 mm to several mm, whereas the maximum depth of the grooves 14 is 0.005 mm to 0.05 mm.

In Fig. 11, small arrows indicate the flow of fluid in the grooves 14 of the end surface 12 in use of the seal ring 6. In the same manner as in Figs.3 to 6, the large arrow R depicts the main rotational direction of the shaft 4. As described above, whereas the seal ring 6 is stationary, lubricating oil in contact with the end surface 12 of the seal ring 6 rotates in the same direction as the shaft 4.

In this embodiment, the grooves 14 extend in the direction opposite to the main rotational direction of the shaft 4 relative to the seal ring 6 from the inner end portions 14a, but do not extend in the main rotational direction from the inner end portions 14a. Thus, upon rotation of the shaft 4 relative to the seal ring 6 in the main rotational direction R, the grooves 14 facilitate discharge of the lubricating oil from the grooves 14 to thin the film of lubricating oil, as indicated by the small arrows, thereby reducing the shear resistance of the film of lubricating oil, and facilitate vaporization of air in the lubricating oil by cavitation to form a film of air 16 occupying substantially the entire area in each of the grooves 14. Air, which forms the air film 16, is also discharged in the direction indicated by the small arrows, but as long as the rotation of the shaft 4 in the main rotational direction R continues, air is generated one after another by cavitation, so that the air film 16 is continuously present in each of the grooves 14. This process can be observed through a transparent plate when, in place of the shaft 4, a transparent plate is pressed against the end surface 12 of the seal ring 6 and rotated.

Therefore, during rotation in the main rotational direction R of the shaft 4, not only the oil film, but also the air film 16 continues to be sandwiched between the end surface 12 of the seal ring 6 and the wall surface on the side of the external space B of the circumferential groove 8 of the shaft 4. Generally, a large amount of air is dissolved in lubricating oil, and as a result cavitation is likely to occur. From another point of view, an amount of energy exerted by bubbles vaporized by cavitation from lubricating oil is small compared to that exerted by water flow, and thus the seal ring 6 and the shaft 4 are less likely to be damaged by the bubbles.

On the other hand, according to the prior art disclosed in Patent Documents 1 to 3, it is expected that introduction of lubricating oil into grooves of a seal ring will facilitate formation of an oil film between the seal ring and another member to reduce friction between the seal ring and the another member and thereby lower a torque. However, if the oil film is of excessive thickness there is a concern that a shear resistance of the oil film will increase and cause an adverse increase in the torque. Furthermore, if an excessive amount of lubricating oil is introduced into the grooves of the seal ring, there is a concern that some of the lubricating oil may leak to an outside space.

Since the film 16 of air produced as described in this embodiment has a much lower shear resistance than that of the film of lubricating oil, the friction between the seal ring 6 and the wall surface of the circumferential groove 8 on the side of the external space B is considerably reduced, resulting in a reduction in the torque. This effect is particularly remarkable when there is a large difference in the relative rotational velocity of the housing 2 and the shaft 4. Furthermore, since the grooves 14 facilitate discharge of the lubricating oil from the grooves 14 upon rotation of the shaft 4 relative to the seal ring 6 in the main rotational direction R, the amount of leakage of the lubricating oil can be reduced as compared with a case in which the liquid is fed into the grooves.

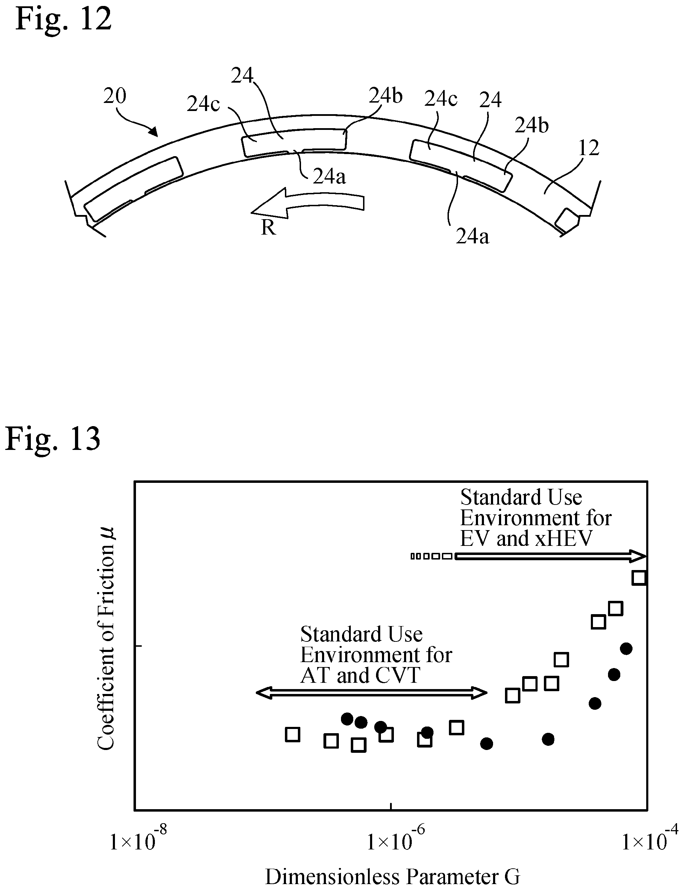

The inventors conducted experiments to confirm the above advantageous effect. In the experiments, the seal ring 6 according to the embodiment and the seal ring 20 of the comparative example shown in Fig. 12 were used. The material of the seal rings 6 and 20 was PEEK.

According to the comparative example, multiple grooves 24 are formed on the end surface 12 on the side of the external space B of the seal ring 20. Each of the grooves 24 is generally T-shaped and has an inner end portion 24a that is located radially inside and two outer end portions 24b and 24c that are located radially outside. The inner end portion 24a is open at the inner peripheral surface of the seal ring 6. The outer end portions 24b and 24c are closed.

In the seal ring 20 according to the comparative example, upon the rotation in the main rotational direction R of the shaft 4 relative to the seal ring 6, lubricating oil is discharged from the outer end portion 24b to the inner end portion 24a, and at the same time, an air film is formed from the outer end portion 24b to the inner end portion 24a, but lubricating oil is sent from the inner end portion 24a to the other outer end portion 24c, so that an oil film is formed from the inner end portion 24a to the outer end portion 24c.

The experimental results are shown in Figs. 13 to 15. In Figs. 13 to 15, the round dot corresponds to the embodiment, and the square dot corresponds to the comparative example.

The dimensionless parameter G axis of abscissas in Fig. 13 was calculated from the following equation.

$$G = \eta UB/W$$

where $\eta$ is the viscosity of lubricating oil (Pa·s), U is the relative velocity between the housing 2 and the shaft 4 (m/s), B is the contact length of the seal ring and the circumferential groove 8 in the circumferential direction (m), and W is the pressing force acting on the seal ring by the lubricating oil (N).

Fig. 13 shows a range of dimensionless parameters G in a standard usage environment for electric vehicles (EVs) and hybrid electric vehicles (xHEVs) and a range of dimensionless parameters G in a standard usage environment for automatic transmissions (ATs) and continuously variable transmissions (CVTs).

The coefficient of friction $\mu$ on the axis of ordinate in Fig. 13 is a coefficient of friction between the seal ring and the wall surface on the side of the external space B of the circumferential groove 8 of the shaft 4. In the experiments, the same shaft 4 was used for the seal ring 6 according to the embodiment and for the seal ring 20 of the comparative example.

As will be apparent from Fig. 13, in the standard use environment for the automatic transmission and the continuously variable transmission, the seal ring 20 of the comparative example exhibited a low coefficient of friction. However, in a case in which the dimensionless parameter G is $1.0 \times 10^{-6}$ or more, which is usual in the standard use environments for electric vehicles and hybrid electric vehicles, the seal rings 20 of the comparative examples, in which the lubricating oil is fed into the grooves 14 to facilitate the formation of the oil film, caused a significant increase in frictional resistance. On the other hand, in the seal ring 6 according to the embodiment in which the air film is formed in the grooves 14, even if the dimensionless parameter G is $1.0 \times 10^{-6}$ or more, the frictional resistance is restrained from increasing.

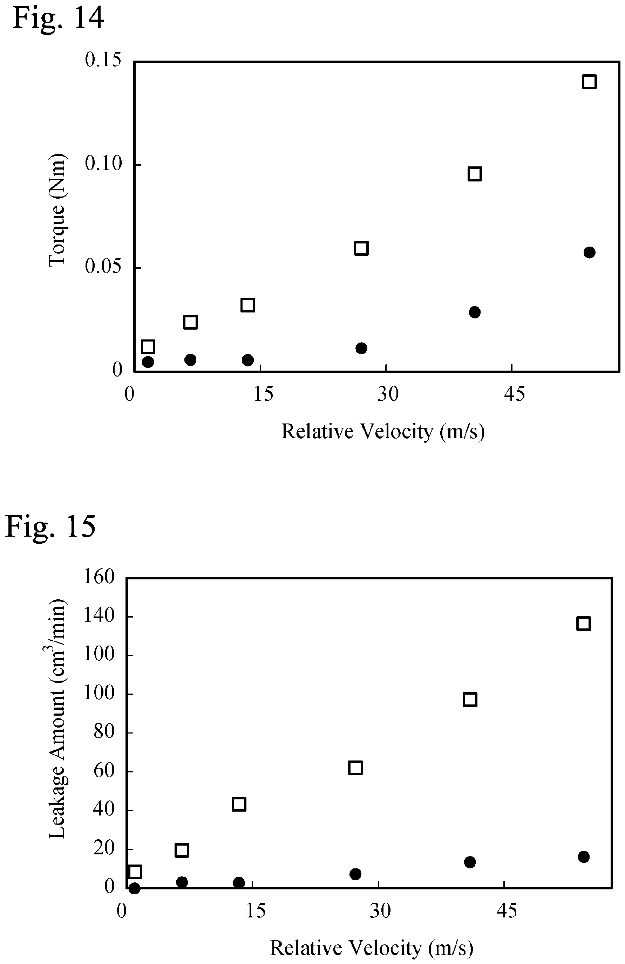

In the experiments shown in Figs. 14 and 15, the pressure exerted on the seal ring by the lubricating oil was 15 kPa. The lubricating oil was an automatic transmission fluid.

The torque on the axis of ordinate in Fig. 14 is a torque imparted by the seal ring to the wall surface on the side of the external space B of the circumferential groove 8 of the shaft 4. In the experiments, the same shaft 4 was used for the seal ring 6 according to the embodiment and the seal ring 20 of the comparative example.

As will be apparent from Fig. 14, the seal ring 6 according to the embodiment achieved a remarkable reduction in torque as compared with the seal ring 20 of the comparative example. The torque imparted by the seal ring 6 according to the embodiment was approximately 40% of the torque imparted by the seal ring 20 of the comparative example.

In the experiment of Fig. 14, the pressure applied to the seal ring by the lubricating oil was 15 kPa. If the pressure applied to the seal ring is equal to or less than 1 MPa, in the seal ring 20 of the comparative example, which facilitates formation of the oil film by feeding the lubricating oil into the grooves 14, the amount of lubricating oil introduced into the grooves 14 and the sliding surface is likely to be reduced, which results in a significant increase in frictional resistance and thus an increase in torque. In contrast, in the seal ring 6 according to the embodiment, which forms a film of air in each of the grooves 14, even if the pressure applied to the seal ring 6 is equal to or less than 1 MPa, a film of air is formed in each groove 14, and the oil film is thinned, thereby restraining an increase in frictional resistance and an increase in torque.

The amount of leakage on the axis of ordinate in Fig. 15 is the amount of leakage of lubricating oil from the lubricating oil space A to the external space B.

As will be apparent from Fig. 15, the seal ring 6 according to the embodiment achieved a remarkable reduction in an amount of leakage as compared with the seal ring 20 of the comparative example. The amount of leakage of the lubricating oil by the seal ring 6 according to the embodiment was approximately 20% of the amount of leakage of the lubricating oil by the seal ring 20 of the comparative example.

The following is understood from the result of Fig. 15. If the difference in velocity of the shaft 4 relative to the seal ring is equal to or greater than 3 m/s, in the seal ring 20 of the comparative example, which facilitates formation of the oil film by feeding lubricating oil into the grooves 14, a significant increase in frictional resistance and thus an increase in torque is likely to result. In contrast, in the seal ring 6 according to the embodiment, which forms a film of air in each of the grooves 14, even when the difference in velocity of the shaft 4 relative to the seal ring 6 is 3m/s or more, an increase in frictional resistance, and thus an increase in torque are restricted.

The present invention has been shown and described with reference to preferred embodiments thereof. However, it will be understood by those skilled in the art that various changes in form and detail may be made without departing from the scope of the invention as defined by the claims. Such variations, alterations, and modifications are intended to be encompassed in the scope of the present invention.

For example, in the above embodiment, the housing 2 and the seal ring 6, which are outer members, are stationary, while the shaft 4, which is the inner member, rotates with respect to the housing 2. However, the seal ring according to the present invention may be disposed between a fixed inner member and a rotating outer member, and may be fixed, e.g., interference fitted to the inner surface of the rotating outer member.

Aspects of the present invention are also set out in the following numbered clauses:

Clause 1. A circular annular seal ring made of a resin and disposed between an inner member and an outer member that rotate relative to each other,

the outer member comprising a liquid-storing space in which a liquid is disposed and an inner surface having a circular cross section, the inner member being disposed in the liquid-storing space and comprising a circumferential groove, the seal ring being stationary relative to the inner surface of the outer member and being slidably disposed in the circumferential groove of the inner member with respect to the inner member to separate the liquid-storing space and an external space, multiple grooves being formed on an end surface on an external space side of the seal ring, each of the grooves comprising an end portion that opens at an inner peripheral surface of the seal ring, each of the grooves extending in a direction opposite to a main rotational direction of the inner member relative to the seal ring from the open end portion, each of the grooves not extending in the main rotational direction from the open end portion.

In this aspect, multiple grooves extend in the direction opposite to the main rotational direction of the inner member relative to the seal ring from the open end portions, but do not extend in the main rotational direction from the open end portions. Thus, upon rotation of the inner member relative to the seal ring in the main rotational direction, the grooves facilitate discharge of the liquid from the grooves and facilitate vaporization of air in the liquid by cavitation to form a film of air in each of the grooves. Since the air film has a much lower shear resistance than that of the liquid film, the friction between the seal ring and another member is significantly reduced, resulting in a reduction in the torque. This effect is particularly remarkable when the relative rotational velocity difference of the members is large. In addition, since the grooves facilitate discharge of the liquid from the grooves upon the rotation of the inner member relative to the seal ring in the main rotational direction, an amount of leakage of the liquid can be reduced as compared with a case in which the liquid is fed into the grooves.

Clause 2. The seal ring according to clause 1, wherein the multiple grooves are configured to facilitate discharge of the liquid from the multiple grooves upon rotation of the inner member relative to the seal ring in the main rotational direction, and to facilitate vaporization of air in the liquid by cavitation to form a film of air in each of the grooves.

Clause 3. The seal ring according to clause 1 or 2, wherein the seal ring is used in a use environment that includes at least a condition in which a dimensionless parameter G is equal to or greater than $1.0 \times 10^{-6}$.

In a case in which the dimensionless parameter G is $1.0 \times 10^{-6}$ or more, a seal ring that feeds liquid into the grooves and facilitates formation of the liquid film is likely to cause a remarkable increase in frictional resistance, and thus an increase in torque. On the other hand, in this aspect, in which the film of air is formed in each of the grooves, even if the dimensionless parameter G is $1.0 \times 10^{-6}$ or more, the increase in frictional resistance is restricted, and the increase in torque is also restricted.

Clause 4. The seal ring according to any one of clauses 1-3, wherein the seal ring is used in a use environment that includes at least a condition in which a relative velocity difference of the inner member and the seal ring is equal to or greater than 3 m/s.

If the relative velocity difference of the inner member and the seal ring is equal to or greater than 3 m/s, a seal ring that feeds liquid into the grooves and facilitates formation of the liquid film is likely to cause a significant increase in frictional resistance, and thus an increase in torque. In contrast, in this aspect, in which the film of air is formed in each of the grooves, even if the relative velocity difference of the inner member and the seal ring is 3 m/s or more, the increase in frictional resistance is restricted, and the increase in torque is also restricted.

Clause 5. The seal ring according to any one of clauses 1-4, wherein the seal ring is used in a use environment that includes at least a condition in which a pressure exerted on the seal ring is equal to or less than 1 MPa.

In a case in which the pressure applied to the seal ring is equal to or less than 1 MPa, in a seal ring that feeds liquid into the grooves and facilitates formation of the liquid film, the amount of liquid introduced into the grooves and the sliding surface is reduced, and thus the frictional resistance may greatly increase, and the torque is also likely to increase. On the other hand, in this aspect, in which the film of air is formed in each of the grooves, even if the pressure applied to the seal ring is equal to or less than 1 MPa, the film of air is formed in each of the grooves and the liquid film becomes thin, so that the increase in frictional resistance is restricted, and the increase in torque is also restricted.

Clause 6. A sealed structure comprising:

an outer member comprising a liquid-storing space in which a liquid is disposed and an inner surface having a circular cross section;

an inner member rotating relative to the outer member and being disposed in the liquid-storing space and comprising a circumferential groove; and

a circular annular seal ring made of a resin and disposed between the inner member and the outer member,

the seal ring being stationary relative to the inner surface of the outer member and being slidably disposed in the circumferential groove of the inner member with respect to the inner member to separate the liquid-storing space and an external space,

an end surface on an external space side of the seal ring comprising multiple grooves,

each of the grooves comprising an end portion that opens at an inner peripheral surface of the seal ring, each of the grooves extending in a direction opposite to a main rotational direction of the inner member relative to the seal ring from the open end portion, each of the grooves not extending in the main rotational direction from the open end portion.

Clause 7. The sealed structure according to clause 6, wherein the multiple grooves are configured to facilitate discharge of the liquid from the multiple grooves upon rotation of the inner member relative to the seal ring in the main rotational direction, and to facilitate vaporization of air in the liquid by cavitation to form a film of air in each of the grooves.

Clause 8. The sealed structure according to clause 6 or 7, wherein the seal ring is used in a use environment that includes at least a condition in which a dimensionless parameter G is equal to or greater than $1.0 \times 10^{-6}$.

Clause 9. The sealed structure according to any one of clauses 6-8, wherein the seal ring is used in a use environment that includes at least a condition in which a relative velocity difference of the inner member and the seal ring is equal to or greater than 3 m/s.

Clause 10. The sealed structure according to any one of clauses 6-9, wherein the seal ring is used in a use environment that includes at least a condition in which a pressure exerted on the seal ring is equal to or less than 1 MPa.

REFERENCE SYMBOLS

A:      Lubricating oil space (liquid-storing space)
B:      External space
R:      Main rotational direction of shaft
1:      Sealed structure
2:      Housing (Outer Member)
2A:     Inner surface
4:      Shaft (inner member)
6:      Seal ring
8:      Circumferential groove
8a:     Bottom surface
10:     End surface
12:     End surface
14:     Groove
14a:    Inner end portion
14b:    Outer end portion
16:     Air film

**Claims**

1.  A circular annular seal ring made of a resin and disposed between an inner member and an outer member that rotate relative to each other,

the outer member comprising a liquid-storing space in which a liquid is disposed and an inner surface having a circular cross section,

the inner member being disposed in the liquid-storing space and comprising a circumferential groove,

the seal ring being stationary relative to the inner surface of the outer member and being slidably disposed in the circumferential groove of the inner member with respect to the inner member to separate the liquid-storing space and an external space,

an end surface on an external space side of the seal ring comprising multiple grooves,

each of the grooves comprising an end portion that opens at an inner peripheral surface of the seal ring, each of the grooves extending in a direction opposite to a main rotational direction of the inner member relative to the seal ring from the open end portion, each of the grooves not extending in the main rotational direction from the open end portion.

2. The seal ring according to claim 1, wherein the multiple grooves are configured to facilitate discharge of the liquid from the multiple grooves upon rotation of the inner member relative to the seal ring in the main rotational direction, and to facilitate vaporization of air in the liquid by cavitation to form a film of air in each of the grooves.

3. The seal ring according to claim 1 or 2, wherein the seal ring is used in a use environment that includes at least a condition in which a dimensionless parameter G is equal to or greater than $1.0 \times 10^{-6}$.

4. The seal ring according to any one of claims 1-3, wherein the seal ring is used in a use environment that includes at least a condition in which a relative velocity difference of the inner member and the seal ring is equal to or greater than 3 m/s.

5. The seal ring according to any one of claims 1-4, wherein the seal ring is used in a use environment that includes at least a condition in which a pressure exerted on the seal ring is equal to or less than 1 MPa.

6. A sealed structure comprising:

an outer member comprising a liquid-storing space in which a liquid is disposed and an inner surface having a circular cross section;
an inner member rotating relative to the outer member and being disposed in the liquid-storing space and comprising a circumferential groove; and
a circular annular seal ring made of a resin and disposed between the inner member and the outer member,
the seal ring being stationary relative to the inner surface of the outer member and being slidably disposed in the circumferential groove of the inner member with respect to the inner member to separate the liquid-storing space and an external space,
an end surface on an external space side of the seal ring comprising multiple grooves,
each of the grooves comprising an end portion that opens at an inner peripheral surface of the seal ring, each of the grooves extending in a direction opposite to a main rotational direction of the inner member relative to the seal ring from the open end portion, each of the grooves not extending in the main rotational direction from the open end portion.

7. The sealed structure according to claim 6, wherein the multiple grooves are configured to facilitate discharge of the liquid from the multiple grooves upon rotation of the inner member relative to the seal ring in the main rotational direction, and to facilitate vaporization of air in the liquid by cavitation to form a film of air in each of the grooves.

8. The sealed structure according to claim 6 or 7, wherein the sealed structure is used in a use environment that includes at least a condition in which a dimensionless parameter G is equal to or greater than $1.0 \times 10^{-6}$.

9. The sealed structure according to any one of claims 6-8, wherein the sealed structure is used in a use environment that includes at least a condition in which a relative velocity difference of the inner member and the seal ring is equal to or greater than 3 m/s.

10. The sealed structure according to any one of claims 6-9, wherein the sealed structure is used in a use environment that includes at least a condition in which a pressure exerted on the seal ring is equal to or less than 1 MPa.

## Fig. 1

## Fig. 2

## Fig. 3

## Fig. 4

## Fig. 5

Fig. 6

Fig. 7

Fig. 8

Fig. 9

Fig. 10

Fig. 11

Fig. 12

Fig. 13

Fig. 14

Fig. 15

## INTERNATIONAL SEARCH REPORT

| International application No. |
| --- |
| PCT/JP2020/006297 |

A. CLASSIFICATION OF SUBJECT MATTER
F16J 15/18(2006.01)i; F16J 15/3244(2016.01)i
FI: F16J15/3244; F16J15/18 C
According to International Patent Classification (IPC) or to both national classification and IPC

B. FIELDS SEARCHED

Minimum documentation searched (classification system followed by classification symbols)
F16J15/18; F16J15/3244

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 10-169782 A (NTN CORPORATION) 26.06.1998 (1998-06-26) fig. 14 | 1–10 |
| A | JP 2018-119672 A (NOK CORP.) 02.08.2018 (2018-08-02) claim 1, paragraphs [0032]-[0034], [0047], fig. 5 | 1–10 |
| A | JP 2013-185689 A (NOK CORP.) 19.09.2013 (2013-09-19) fig. 10 | 1–10 |
| A | JP 2006-9897 A (NOK CORP.) 12.01.2006 (2006-01-12) fig. 8 | 1–10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 March 2020 (19.03.2020) | 07 April 2020 (07.04.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

Form PCT/ISA/210 (patent family annex) (January 2015)

| INTERNATIONAL SEARCH REPORT | International application no. |
|---|---|
| Information on patent family members | PCT/JP2020/006297 |

| Patent Documents referred in the Report | Publication Date | Patent Family | Publication Date |
|---|---|---|---|
| JP 10-169782 A | 26 Jun. 1998 | (Family: none) | |
| JP 2018-119672 A | 02 Aug. 2018 | (Family: none) | |
| JP 2013-185689 A | 19 Sep. 2013 | (Family: none) | |
| JP 2006-9897 A | 12 Jan. 2006 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011105513 A
- WO 2011162283 A
- JP 3088062 U